# EUROPEAN PATENT SPECIFICATION

(11) **EP 1 064 211 B1**
(45) Date of publication and mention of the grant of the patent: **24.12.2008**
(21) Application number: 99910916.8
(22) Date of filing: 11.03.1999
(51) Int. Cl.: B65G 43/00, B65G 41/02

(54) **CONVEYOR SYSTEM FOR PAPER PULP BALES**
FÖRDERSYSTEM FÜR BALLEN AUS PAPIERMASSE
SYSTEME DE TRANSPORT POUR DES BALLES DE PATE A PAPIER

(30) Priority: 12.03.1998 SE 9800807
(43) Date of publication of application: 03.01.2001
(73) Proprietor: Valmet Fibertech Aktiebolag, 851 94 Sundsvall (SE)
(72) Inventor: EDSTRÖM, Tomas, S-865 51 Ankarsvik (SE)
(74) Representative: Hopfgarten, Nils
(86) International application number: PCT/SE1999/000377
(87) International publication number: WO 1999/046192

(56) References cited:
- EP-A1- 0 564 430
- CH-A- 520 049
- DE-A1- 2 918 149
- DE-A1- 3 513 753
- DE-A1- 4 447 293

## Description

The present invention relates to a stationary, paper pulp bale conveyor system for use in baling paper pulp, having a frame supporting a carrier device for paper pulp bales, said carrier device being movably supported in relation to the frame.

In previously known technology the driving motors for the travelling movement of the conveyor, and also the driving motors for the carrier device on the conveyor frame are stopped in different stop positions by the action of mechanically mounted limit positions. The limit positions communicate with contactors, for instance, which activate the driving motors. When the contacts are in ON position the driving motors run at full speed and are stopped when the contacts, influenced by the limit positions, are caused to assume OFF position. However, the travelling movement and/or carrier device movement is stopped with a certain time delay which means that precision of the stop in the path of travel or of the carrier device on the conveyor is poor. The stop sometimes occurs "too early" in the actual movement and sometimes "too late". The location of the limit position in the path of travel and/or the limit positions of the carrier device must then be mechanically adjusted so that the stop occurs at the intended location. Adjusting the limit positions in this manner is impractical and time-consuming.

It is often desirable for the conveyor to be stopped at several points along its path of travel and/or for the carrier device to be stopped at several points in relation to the conveyor frame. According to known technology this can be realised by permitting the travelling movement or carrier device movement to continue for a specified time and then be stopped, which is hardly an exact method. Alternatively, several stop locations are determined by means of limit positions arranged at these locations. The problems encountered with such an arrangement are especially difficult as regards the actual travelling movement. Limit position indicators must be used to provide a number of "preparatory" limit positions before a stop position, to indicate that the speed shall be reduced and the driving motor must be stopped some way before the actual stop position, since the conveyor will continue its movement due to inertia. The load on the conveyor is also of significance here. The conveyor must often be pulled to the actual stop position with the aid of hydraulic devices after the driving motor has been stopped. Another drawback is that the situation is different when the conveyor is travelling in the opposite direction. The result is that a very large number of limit positions is required. For five stop positions, for instance, thirteen limit positions are required, including preparatory limit positions.

With current technology it is thus difficult to set correct stop positions for the conveyor movements since these are dependent on the performance of the driving motor, cycle time of the control program, friction on rails and the total weight of the conveyor, which is also dependent on the size of the load.

In EP 0 564 430 a crane like load carrier is disclosed intended for use in a high bay storage facility for carrying articles to and from respectively a specific place on a specific level above the floor. The crane comprises a wheeled chassis with a vertical lifting mast and a lifting fork movable along the mast for lifting articles. Above the track, along which the crane is intended to move and along the lifting mast perforated rails are mounted, and on the mast top and on the lifting fork U-shaped photocell units are mounted to move along the rails together with the crane chassis and lifting fork respectively, to deliver pulses, corresponding to the perforation on the rails, when crane chassis and lifting fork are moving.

Great precision of the conveyor movement is required for many applications, e.g. baling paper pulp. Several bales must often be placed on the carrier device one at a time. It is then of great importance that the distribution of or the spacing between the bales is always substantially the same. The bales must also be well centered on the conveyor during transfer from one conveyor to the next one. The greater the precision in this respect is, which is thus determined by the carrier device being stopped at the correct positions, the simpler will be subsequent handling with machines, trucks and the like.

The object of the present invention is to eliminate the above-discused drawbacks currently existing in known conveyors.

This object is achieved with a conveyor system as defined in claim 1.

In the conveyor system in accordance with the invention, the carrier device thus comprises two conveyor chains supported by gear wheels attached to the conveyor frame and driven by a driving motor, the driving motor is connected via gear wheels and separate drive chains to a shaft common to both conveyor chains so that they are all the time driven at the same speed, sensors are arranged to contactless detect the position of the carrier device in relation to a reference position on the conveyor frame by detecting the rotation of the gear wheels for establishing the rotation of the conveyor chains in relation to the reference position and to deliver a corresponding train of pulses, each pulse corresponding to a certain distance of movement for determining the position of the carrier device by counting pulses, spring limit position indicators being arranged at the ends of the conveyor for defining said reference position, when affected by a load when carried by the carrier device passed onto one end of the conveyor, and the limit position where the load is leaving the conveyor being used as a safety device.

The position of the carrier device can be detected by measuring the rotation of the driving motor or of the gear wheels. Only one limit position is thus required at each end of the carrier device in order to obtain starting points to determine the relative position of the carrier device after the load has influenced the limit position.

The conveyor system in accordance with the invention offers not only functional improvements but also advantages from the manufacturing and installation aspects. With the conveyor system in accordance with the invention the stop positions are determined by means of software instead of physically as with the previously known technology. This means that all conveyors can be made the same, thereby facilitating standardisation and thus manufacture. Installation and starting up the conveyor movements can be performed more quickly since no physical stop positions need be moved and adjusted, and the load on the conveyor carrier device can be taken into consideration when controlling the movements of the conveyor.

The pulse transducer technology in accordance with the invention is also well suited for use at so-called frequency operation of the driving motors. At frequency operation the speed of the driving motor is controlled by means of pulses having varying on and off times. The motor speed can in this way be optionally controlled from standstill up to full speed and smooth starting and stopping movements can be achieved so the load is not displaced. Higher speeds can be used for the movements of the conveyor and the speed can be gradually reduced so that the desired stop position is reached exactly. The capacity of the plant is increased in relation to known technology if conveyor systems comprising pulse transducer technology are used in a baling line, for instance.

According to an advantageous embodiment of the conveyor system in accordance with the invention the sensors comprise inductive pulse transducers arranged to detect inductive changes and, dependent on these changes, to deliver corresponding pulse trains. These pulse transducers are extremely reliable and especially well suited for industrial applications, and since detection occurs contactless, there is no wear or abrasion. The pulse transducers are accurate and are well protected from vibrations, damp and dirt and can therefore advantageously be used in tough environments.

To further explain the invention, an embodiment of the conveyor system in accordance with the invention, selected by way of example, will now be described with reference to the accompanying drawing, in which
Figures 1 shows an example of conveyor system in accordance with the invention, and
Figure 2 illustrates the principle of a sensor suitable for use with the conveyor system in accordance with the invention.

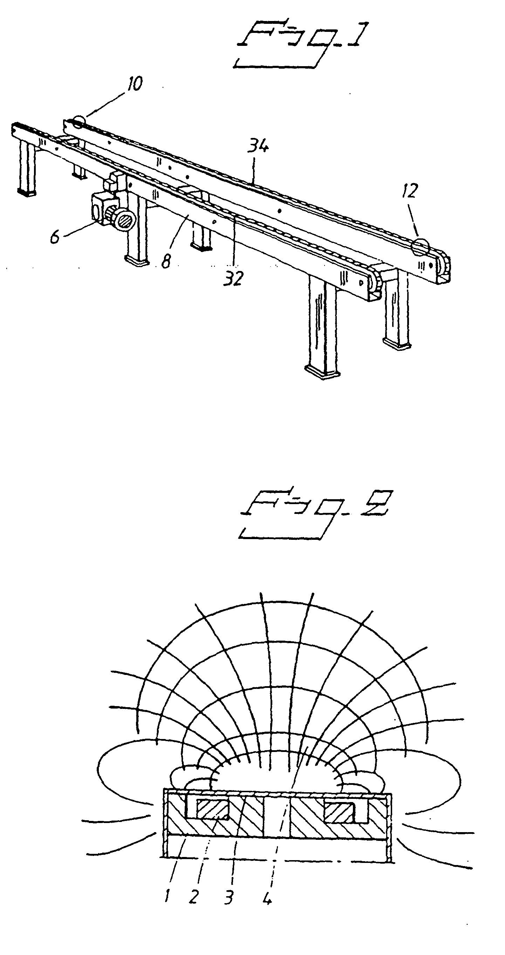

The example of embodiment of the conveyor system in accordance with the invention shown in Figure 1 is intended for use in a plant for baling paper pulp.

Figure 1 shows a stationary chain conveyor with a carrier device in the form of two conveyor chains 32, 34. The chains 32, 34 are supported by gear wheels attached to the conveyor frame 8 and are driven by a driving motor 6. Spring limit position indicators 10, 12 are arranged at the ends of the conveyor. When a load is passed onto one end of the conveyor it affects the limit position at this end and this is then used as zero or reference position.

Sensors, suitably inductive pulse transducers of a type shown in Figure 2, are arranged to detect the rotation of the gear wheels for establishing the rotation of the conveyor chains 32, 34 in relation to the zero or reference position. The zero or reference position on the conveyor in question, where the load at present is on the chain, is used as point of departure, and emitted from this zero or reference position the number of pulses is then counted in order to obtain the actual position.

The limit position where the load leaves the conveyor is used as a safety device so that the load does not fall off the conveyor.

The driving motor 6 for the conveyor chains 32, 34 is connected, via gear wheels and separate drive chains (not shown in the figure), to a shaft common to both chains 32, 34 so that they are all the time driven at the same speed. A separate tensioning device is preferably arranged for each chain to ensure correct individual tension in each chain.

The direction of movement of the carrier device in relation to the conveyor frame can be determined through knowledge of the direction of rotation of the driving motor, or, alternatively, by two phase-shifted pulse trains.

All driving motors in the conveyor described above are reversible for switching the direction of movement of the chains.

The example of conveyor system shown in Figure 1 can of course be modified and varied in many ways. Thus, the width of the conveyor and number of chains may be increased, for instance, and the length of the conveyor may be varied. This offers great flexibility in constructing various conveyor systems.

In order to detect the rotation of the driving motor 6 sensors are used, for instance, of the type described in the brochure "ifm inductive proximity switches", ifm Catalogue 1997/1998, which emit pulse trains depending on the rotation of the motor. Figure 2 shows the principle structure of such a sensor in the form of an inductive pulse indicator comprising a ferrite core 1 with an inductive coil 2. The core 1 and the coil 2 are enclosed in a casing 3, and the electromagnetic field around the sensor is illustrated at 4.

The coil 2 and ferrite core 1 form the inductive part of a tuned LC circuit that drives an oscillator. The coil 2 and core 1 generate a low-energy electromagnetic field 4 on the sensor side of the pulse transducer. When an electric conductor, such as a metal object , enters this field eddy currents are generated in the conductor. These eddy currents draw energy from the field 4 and when the eddy currents become so large that amplifiers pertaining to the pulse transducer are unable deliver sufficient energy, the oscillator stops and the field collapses. In this way "no object in the active zone of the sensor" or "presence of object in the active zone" can be detected in the form of oscillations with large amplitude or oscillations with small amplitude, and corresponding pulse trains are delivered.

Thus, the movement of a metal part, e.g. a tooth on a rotating gear wheel, can be detected as it moves through the active zone of the sensor. Since the detection is contactless, no mechanical wear occurs and the sensor can be protected from damp and dirt inside a casing. Switching between high amplitude and low amplitude may be effected with high frequency and detection is therefore accurate.

Other types of sensors can also be used in the conveyor in accordance with the invention, e.g. sensors in the form of capacitive pulse transducers, as well as sensors comprising Hall elements, in order to detect the rotation of the wheel or driving motor in question, and deliver a corresponding pulse train. The sensor may also be of optical type, i.e. comprise a light source which emits a light ray towards a receiver, the light source and the receiver being arranged so that the light ray is interrupted a predetermined number of times per revolution of the wheel or driving motor in question, e.g. as a result of the passage of teeth in a rotating gear wheel. A corresponding output pulse train is then obtained from the receiver. Other types of optical sensors, emitting light and detecting reflected light from dark and light bands, oriented perpendicular to the track of movement, e.g. on a strip along the track, can be used. The sensors may also be in the form of incremental transducers arranged to be stepped forward by the pulses a predetermined number of steps per revolution of the wheel or driving motor in question. These transducers are often designed with inductive or optical sensors.

In the embodiment described above by way of example the pulse transducers are arranged at gear wheels on the output shaft of the driving motor. Naturally the pulse transducers may also be arranged to detect rotation of the gear wheels over which the load chains 32, 34 run. In principle the sensors can be arranged on any moving part in the motor.

Members are preferably provided to control the speed of the carrier device. This is possible since, thanks to the sensor, the location of the carrier device is known. The speed can thus gradually be reduced so that a "gentle" stop in exactly the desired position is achieved, preferably with the aid of so-called frequency operation, as described above.

## Claims

1. A stationary, paper pulp bale conveyor system for use in baling paper pulp, having a frame (8) supporting a carrier device (32, 34) for paper pulp bales, said carrier device being movably supported in relation to the frame, whereby the carrier device comprises two conveyor chains (32, 34) supported by gear wheels attached to the conveyor frame (8) and driven by a driving motor (6), the driving motor is connected via gear wheels and separate drive chains to a shaft common to both conveyor chains (32, 34) so that they are all the time driven at the same speed, sensors are arranged to contactless detect the position of the carrier device (32, 34) in relation to a reference position on the conveyor by detecting rotation of the gear wheels for establishing the rotation of the conveyor chains (32, 34) in relation to the reference position and to deliver a corresponding train of pulses, each pulse corresponding to a certain distance of movement for determining the position of the carrier device by counting pulses, spring limit position indicators (10, 12) being arranged at the ends of the conveyor for defining said reference position when affected by a load when carried by the carrier device passed onto one end of the conveyor, and the limit position where the load is leaving the conveyor being used as a safety device.

2. A conveyor system as claimed in claim 1, **characterized in that** means are provided to control the speed of the carrier device (32, 34) depending on the pulse train delivered by said sensors.

3. A conveyor system as claimed in claims 1 or 2, **characterized in that** the driving motor (6) is reversible to allow switching of the direction of movement of the carrier device (32, 34).

4. A conveyor system as claimed in any of the preceding claims, **characterized in that** the end-position indicators (10, 12) are arranged to stop the movement of the carrier device (32, 34) when it reaches predetermined end positions.

5. A conveyor system as claimed in any of the preceding claims, **characterized in that** the sensors comprise inductive pulse transducers (1, 2, 3) arranged to detect inductive changes and, dependent on these changes, to deliver corresponding pulse trains.

## Patentansprüche

1. Stationäres Papierzellstoffballen-Fördersystem zur Verwendung bei Ballenherstellung von Papierzellstoff, welches einen Rahmen (8) aufweist, der eine Trägereinrichtung (32, 34) für Papierzellstoffballen trägt, wobei die Trägereinrichtung beweglich bezüglich des Rahmens getragen wird, wodurch die Trägereinrichtung zwei Förderketten (32, 34) umfasst, welche durch an den Förderrahmen (8) angefügte und durch einen Antriebsmotor (6) angetriebene Zahnräder getragen werden, wobei der Antriebsmotor über Zahnräder und separate Antriebsketten an eine gemeinsame Welle für beide Förderketten (32, 34) gekoppelt ist, so dass diese stets mit gleicher Geschwindigkeit angetrieben werden, wobei Sensoren zum kontaktlosen Erfassen der Postition der Trägereinrichtung (32, 34) bezüglich einer Referenzposition auf der Fördereinrichtung durch Erfassen der Rotation der Zahnräder zur Herstellung der Rotation der Förderketten (32, 34) bezüglich der Referenzposition und zur Ausgabe einer entsprechenden Impulsfolge, wobei jeder Impuls einem bestimmten Bewegungsabstand entspricht, um die Postition der Trägereinrichtung durch Zählen von Impulsen zu bestimmen, wobei Federgrenzpositionsindikatoren (10, 12) an den Enden der Fördereinrichtung zum Festlegen der Referenzposition angeordnet sind, wenn diese durch eine von der Trägereinrichtung getragenen Last beeinflusst wird, die an ein Ende der Fördereinrichtung weitergegeben wurde, und wobei die Grenzposition, wo die Last die Fördereinrichtung verlässt, als eine Sicherheitseinrichtung verwendet wird.

2. Fördersystem gemäß Anspruch 1, wobei Mittel zum Steuern der Geschwindigkeit der Trägereinrichtung (32, 34) in Abhängigkeit von der durch die Sensoren aufgegebenen Impulsfolge vorgegehen sind.

3. Fördersystem gemäß Anspruch 1 oder 2, **dadurch gekennzeichnet, dass** der Antriebemotor (6) umkehrbar ist, um ein Umschalten der Richtung der Bewegung der Trägereinrichtung (32, 34) zu ermöglichen.

4. Fördersystem gemäß irgendeinem der vorhergehenden Ansprüche, **dadurch gekennzeichnet, dass** die Endpositionsindikatoren (10, 12) angeordnet sind, um die Bewegung der Trägereinrichtung (32, 34) zu stoppen, wenn sie vorbestimmte Endpositionen erreicht.

5. Fördersystem gemäß irgendeinem der vorhergehenden Ansprüche, **dadurch gekennzeichnet, dass** die Sensoren induktive Impulsumformer (1, 2, 3) umfassen, die angeordnet sind, um induktive Änderungen zu erfassen, und, in Abhängigkeit von diesen Änderungen, entsprechende Impulsfolgen auszugeben.

## Revendications

1. Système fixe de transport pour des balles de pâte à papier à utiliser dans la formation de balles de pâte à papier, comportant un châssis (8) supportant un dispositif de transport (32, 34) destiné aux balles de pâte à papier, ledit dispositif de transport étant supporté de façon mobile par rapport au châssis, de sorte que le dispositif de transport comporte deux chaînes de convoyeur (32, 34) supportées par des roues de transmission fixées sur le châssis de convoyeur (8) et entraînées par un moteur d'entraînement (6), le moteur d'entraînement est connecté par l'intermédiaire des roues de transmission et des chaînes d'entraînement séparées à un arbre commun aux deux chaînes de convoyeur (32, 34) de façon qu'elles soient tout le temps entraînées à la même vitesse, des capteurs sont disposés pour détecter sans contact la position du dispositif de transport (32, 34) par rapport à une position de référence sur le convoyeur en détectant une rotation des roues de transmission afin d'établir la rotation des chaînes de convoyeur (32, 34) par rapport à la position de référence et pour délivrer un train d'impulsions correspondant, chaque impulsion correspondant à une certaine distance de déplacement en vue de déterminer la position du dispositif de transport en comptant les impulsions, des indicateurs à ressort de position limite (10, 12) étant disposés au niveau des extrémités du convoyeur pour définir ladite position de référence si elle est affectée par une charge quand elle est transportée par le dispositif de transport ayant dépassé une extrémité du convoyeur, et la position limite dans laquelle la charge quitte le convoyeur étant utilisée comme un dispositif de sûreté.

2. Système de transport selon la revendication 1, **caractérisé en ce que** des moyens sont prévus pour commander la vitesse du dispositif de transport (32, 34) en fonction du train d'impulsions délivrées par lesdits capteurs.

3. Système de transport selon les revendications 1 ou 2, **caractérisé en ce que** le moteur d'entraînement (6) peut s'inverser pour permettre un changement de la direction du déplacement du dispositif de transport (32, 34).

4. Système de transport selon l'une quelconque des revendications précédentes, **caractérisé en ce que** les indicateurs de position d'extrémité (10, 12) sont disposés pour arrêter le déplacement du dispositif de transport (32, 34) lorsqu'il atteint des positions d'extrémité prédéterminées.

5. Système de transport selon l'une quelconque des revendications précédentes, **caractérisé en ce que** les capteurs comportent des transducteurs inductifs d'impulsions (1, 2, 3) disposés pour détecter des variations d'induction et, en fonction de ces variations, délivrer des trains d'impulsions correspondants.
